# EUROPEAN PATENT APPLICATION

(11) **EP 3 748 258 A1**
(43) Date of publication of application: **09.12.2020**
(21) Application number: 19382476.0
(22) Date of filing: 06.06.2019
(51) Int. Cl.: F25B 30/06, F25B 15/00, F25B 15/04

(54) **ABSORPTION MACHINE FOR AIR CONDITIONING ACTIVATED BY THERMAL ENERGY**

(71) Applicant: Universitat Rovira I Virgili, 43003 Tarragona (ES)
(72) Inventor: Vallès Rasquera, Joan Manel, 43003 TARRAGONA (ES); Coronas Salcedo, Alberto, 43003 TARRAGONA (ES); Bourouis Chebata, Mahmoud, 43003 TARRAGONA (ES)
(74) Representative: Isern Patentes y Marcas S.L.

(57) **Abstract**

The invention relates to a single-stage absorption heat transformer, capable of producing heat for the heating of buildings, which uses as a heat source a thermal energy source configured to provide a fluid with a temperature between 35° C and 50° to two of the heat exchangers, as well as a reconfiguration of the machine which gives it the capacity to act as a simple-stage absorption chiller which, also activated by low-temperature thermal energy, can produce cold water, thus solving the needs for air conditioning of buildings in an ecological way and with only one set of equipment.

## Description

### OBJECT OF THE INVENTION

The present invention has a first object consisting of an absorption machine which, by using low-temperature thermal energy, can produce hot water.

A second object of the invention consists of a reconfiguration of the machine to also give it the capacity to act as a simple-stage absorption chiller which, also activated by low-temperature thermal energy, can produce cold water, thus solving the needs for air conditioning of buildings in an ecological manner and with only one set of equipment.

### BACKGROUND OF THE INVENTION

Heat pumps are known in the state of the art, consisting of machines capable of providing heating, cooling and sanitary hot water by means of a single set of equipment. They take heat from an external source and transport it inside the enclosures, heating them, or acting in reverse, bringing the heat from inside the enclosures to the outside, cooling them. This has a cost represented by the energy consumption of the machine.

These heat pumps can be activated electrically, in this case referring to electrical heat pumps based on the technology of mechanical vapour compression, or thermally, in which case the technology existing on the market would be absorption machines.

Although still in a residual manner, there are single-stage absorption machines that are being used in buildings as absorption chillers for air conditioning in summer. In this case, they produce a stream of cold water (7-10° C) using as a heat source a stream of hot water at 80-100° C from conventional flat plate thermal solar collectors.

However, these conventional absorption machines can not be reversed and used for heating in winter as heat transformers because they require a heat source at too high of a temperature, beyond the reach of flat solar collectors.

The absorption heat transformers built until now use the Water-Lithium Bromide solution. However, this working mixture has limitations when the absorption heat transformer must be used for heating in winter, since the Water-Lithium Bromide mixture cannot be used at negative room temperatures, due to the freezing point of water at 0° C.

New working mixtures, such as Ammonia-Lithium Nitrate, have gained the interest of researchers. There are several projects which have proposed absorption chillers with Ammonia-Lithium Nitrate solution as a working mixture, as disclosed in patent ES2356542, although recently, this mixture has also been proposed to be used in absorption heat transformers, according to the article by J.A. Hernandez-Magallanes, W. Rivera and A. Coronas, titled "Comparison of single and double stage absorption and resorption heat transformers operating with the ammonia-lithium nitrate mixture" (Applied Thermal Engineering 125, 2017, p. 53-68).

However, no heat transformer activated by flat solar collectors or by any other equivalent source of thermal energy has been reported, the working temperature of which is between 35° C and 50° C.

At the same time, no absorption machine has been reported which is capable of operating both for cooling, based on a single-stage absorption chiller, and for heating, based on a single-stage heat transformer, and thereby satisfying the demand for air conditioning in a single machine, and even less so using flat solar collectors for the activation thereof. The present invention contributes to solve the existing deficit.

### DESCRIPTION OF THE INVENTION

The first object of the present invention corresponds to a machine consisting of a single-stage absorption heat transformer, capable of producing heat for the heating of buildings, and which is characterised by being configured to use conventional thermal energy as a heat source. To do so, the refrigerant-absorbent solution used as a working mixture must allow the heat transformer to operate even when the outside temperature is close to or below 0° C, while at the same time providing high coefficients of performance (COP). For example, preferably but not exclusively, the solution could be the Ammonia-Lithium Nitrate mixture.

A second object of the invention consists of the reconfiguration of said heat transformer in order to convert it into a machine which, when the user chooses, can also act as a simple-stage absorption chiller which, also activated by thermal energy, is capable of producing cold for the air conditioning of buildings in summer.

In relation to the first object of the invention, the absorption machine consisting of a heat transformer, has the following components:
- a first heat exchanger consisting of a generator,
- a second heat exchanger consisting of a condenser,
- a third heat exchanger consisting of an evaporator,
- a fourth heat exchanger consisting of an absorber,
- a heat recuperator,
- a heat dissipation system,
- an expansion valve for the circuit of the solution that is directed to the generator coming from the absorber,
- a first hydraulic pump for the circuit of the solution which is directed to the absorber coming from the generator, and
- a second hydraulic pump for the circuit of the refrigerant which is directed to the evaporator coming from the condenser,

The present absorption machine is characterised in that it comprises a thermal energy source configured to provide the generator with a fluid the temperature of which is between 35° C and 50° C. This thermal energy source can be, for example, a flat solar collector or a system for harnessing residual heat from a cogenerator.

The generator of the present heat transformer is configured to receive the refrigerant-absorbent solution rich in refrigerant and, thanks to the heat received from the thermal energy source, evaporate a portion of the refrigerant from the mixture and provide it to the condenser. At the same time, the generator is connected to the first hydraulic pump, which is configured to pump the solution that was not evaporated in the generator, poor in refrigerant, to the absorber. Preferably, the machine comprises a first storage tank for said solution coming from the generator, from which it is pumped to the absorber. Likewise, this circuit is configured so that said unevaporated solution, on the way to the absorber, passes through the heat recuperator, as will be recalled later on.

The condenser is configured to receive the refrigerant in vapour phase coming from the generator and condense it, in order to then provide it to the second hydraulic pump. In order to dissipate the heat generated in this process, the condenser is connected to the heat dissipation system, which preferably consists of a dry dissipator. Moreover, also preferably, the machine comprises a second storage tank for the condensed refrigerant coming from the condenser. Said second hydraulic pump, in turn, is configured to pump the refrigerant to the evaporator, preferably from said refrigerant tank.

The evaporator of the present transformer is configured to receive the refrigerant coming from the second hydraulic pump and, thanks to the heat supplied by the thermal energy source, evaporate it and provide it to the absorber.

The absorber is configured to receive the refrigerant in vapour phase from the evaporator and have it absorbed by the mixture poor in refrigerant, which comes from the first hydraulic pump, as mentioned previously. This absorption process produces the useful heat with which the medium or the chamber to be heated is heated, in turn heating the very solution. At the same time, the absorber is configured to direct this solution rich in refrigerant to the expansion valve, which is configured to reduce the pressure thereof, but first making it pass through the heat recuperator, wherein it preheats the solution poor in refrigerant that is directed to the very absorber.

As mentioned previously, the heat recuperator is configured so that the solution rich in refrigerant which is directed to the generator from the absorber gives up a portion of the heat thereof to the solution poor in refrigerant which circulates to the same absorber.

Likewise, the first and second hydraulic pumps are configured to, respectively, pump the poor mixture from the generator to the absorber (in this case making it pass through the heat recuperator) and pump the refrigerant coming from the condenser to the evaporator.

With the present invention, thanks to the heat supplied by the thermal energy source to the generator and to the evaporator, it is possible to raise the temperature of the refrigerant to an intermediate temperature sufficient to separate it from the solution in the generator at a low pressure level and to evaporate it in the evaporator at a high pressure level. Thanks to this, the refrigerant vapour is capable of producing heat at a higher temperature level when absorbed in the absorber, said heat being directed to the chamber or medium that is to be heated. In other words, the present heat transformer is capable of recuperating the available heat from the thermal energy source at a medium-low temperature level and converting it into useful heat at a higher temperature, which can be used directly in conventional heating systems of buildings. Moreover, the heat transformer, contrary to what happens in electric heat pumps, achieves better performance and greater power when the temperature outside decreases.

As previously mentioned, another object of the invention consists of the reconfiguration of said heat transformer, converting it into a machine which, when the user chooses, can also act as a simple-stage absorption chiller, capable of producing cold for the air conditioning of buildings in summer.

The present absorption machine, reconfigured to also act as an absorption chiller, in addition to the aforementioned components of the previous heat transformer, also comprises a second expansion valve for the circuit of the refrigerant. Therefore, in the reconfigured absorption machine, the two circuits continue to be distinguished: the circuit of the refrigerant-absorbent solution and the refrigerant circuit alone, the latter being the one comprising this second expansion valve.

When the absorption machine works as a heat transformer, it uses the two hydraulic pumps and the first expansion valve (that of the solution), leaving the second expansion valve (that of the refrigerant) inoperative. When the absorption machine works as an absorption chiller, it uses the two expansion valves and the first hydraulic pump (that of the solution), leaving the line wherein the second hydraulic pump (that of the refrigerant) is located inoperative. Therefore, the absorption machine in this second object of the invention comprises a series of control valves for directing the refrigerant either through the second hydraulic pump for the heat transformer mode or through the second expansion valve for the absorption chiller mode.

In turn, when changing from the heat transformer configuration to the absorption chiller configuration, the direction of circulation of the refrigerant changes, as well as the function of the heat exchangers, which act in the following manner:
- the evaporator acts as a condenser,
- the condenser acts as an evaporator,
- the generator acts as an absorber, and
- the absorber acts as a generator.

Since the components of the absorption machine remain the same when changing from the absorption chiller configuration to the heat transformer configuration, thus changing only the function thereof, as of now reference will be made to the components of the absorption machine in the following manner:
- GEN/ABS (Generator/Absorber) for the heat exchanger which acts as a generator when the machine works as a heat transformer and as an absorber when the machine works as an absorption chiller.
- ABS/GEN (Absorber/Generator) for the heat exchanger which acts as an absorber when the machine works as a heat transformer and which acts as a generator when the machine works as an absorption chiller.
- EVAP/COND (Evaporator/Condenser) for the heat exchanger which acts as an evaporator when the machine works as absorption heat transformer and as a condenser when the machine works as an absorption chiller.
- COND/EVAP (Condenser/Evaporator) for the heat exchanger which acts as a condenser when the machine works as an absorption heat transformer and as an evaporator when the machine works as an absorption chiller.

When the machine works as an absorption chiller, unlike when it works as a heat transformer, the fluid coming from the thermal energy source must be supplied to the ABS/GEN. In this case, the temperature of the fluid should preferably be between 70° C and 90° C.

As mentioned previously, the machine comprises a dissipation system connected to the COND/EVAP and configured to get rid of the heat released therein when the refrigerant is condensed when the machine works as a heat transformer. Likewise, when the machine works as an absorption chiller, the dissipation system must be disconnected from the COND/EVAP and connected to the GEN/ABS and the EVAP/COND in order to get rid of the heat released therein when the refrigerant is absorbed and condensed respectively. The dissipation system is preferably dry, which prevents the use of a wet cooling tower in a building, thus avoiding high maintenance costs and health risks. In addition, the wet cooling tower could not be used to get rid of the heat released in the COND/EVAP when the absorption machine works as a heat transformer if room temperature is below 0° C.

In order to connect the thermal energy source, the dissipator and the means to be heated or cooled to the suitable components according to the operating mode, the absorption machine comprises other control valves configured to do so.

Finally, as a priority but not exclusively, all the heat exchangers making up the cycle can be designed based on exchangers with welded or semi-welded plates, given the moderate temperatures and operating pressures.

### BRIEF DESCRIPTION OF THE DRAWINGS

Figure 1 is a schematic representation of an exemplary embodiment of the present absorption machine configured as a heat transformer.
Figure 2 is a pressure-temperature diagram representative of the cycles of the solution and of the refrigerant in the present absorption machine configured as a heat transformer.
Figure 3 is a schematic representation of a second exemplary embodiment of the present absorption machine with the modifications and the configuration which enables it to work in the absorption chiller mode.
Figure 4 is a pressure-temperature diagram representative of the cycles of the solution and the refrigerant in the absorption machine with the modifications and the configuration which enables it to work in the absorption chiller mode.

### DESCRIPTION OF PREFERRED EMBODIMENTS

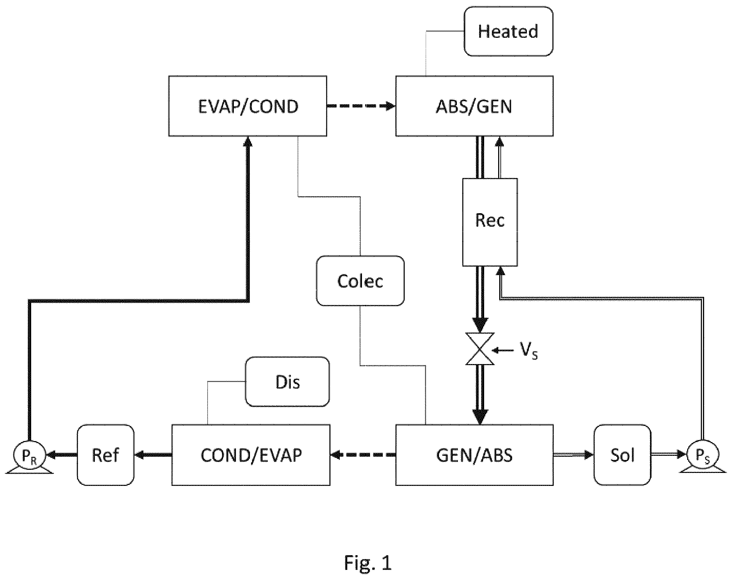

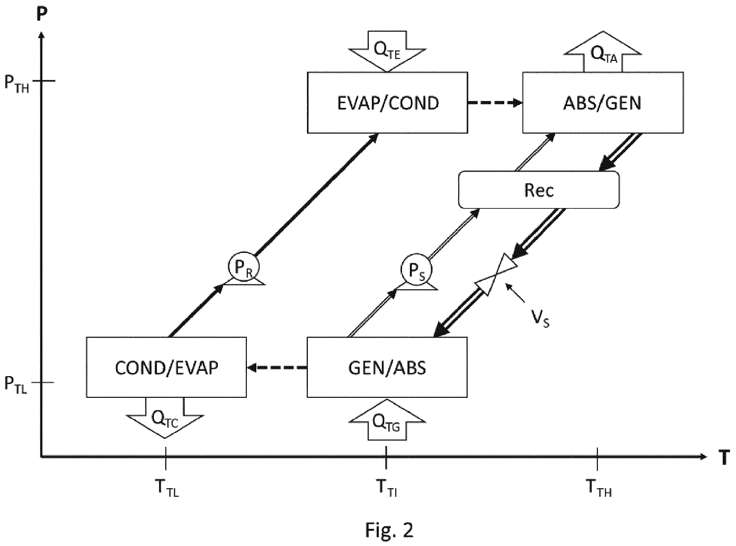

As shown in Fig. 1 and in Fig. 2, the first exemplary embodiment of the present invention consists of an absorption machine configured to work as a heat transformer, wherein the refrigerant-absorbent solution used is the Ammonia-Lithium Nitrate mixture.

In this embodiment of the absorption machine, the first heat exchanger GEN/ABS is configured to receive a constant amount of heat Q_{TG} (the letter "T" of the subscript referring to the term "Transformer") from a flat solar collector (Colec) configured to supply a fluid at a temperature between 35° C and 50° C, which will act as a source of thermal energy in this exemplary embodiment. Thanks to raising the temperature of the Ammonia-Lithium Nitrate solution to an intermediate temperature T_{TI}, a portion of the ammonia will evaporate from the solution.

Said ammonia vapour (represented in the figures by dashed arrows) will continue through a circuit different from that of the unevaporated Ammonia-Lithium Nitrate solution (represented in the figures by narrow double arrows), which becomes poor in ammonia. On one hand, this poor solution will be stored in a first tank (Sol), from which it will be pumped to the fourth heat exchanger ABS/GEN by means of the first hydraulic pump (Ps), as will be mentioned later. On the other hand, ammonia in vapour phase at intermediate temperature T_{TI} and low pressure P_{TL} will circulate to the second heat exchanger COND/EVAP, wherein it will deliver a quantity of heat Q_{TC} to the outside and will be condensed, staying at a low temperature T_{TL}. In this exemplary embodiment, the heat will be delivered to the outside by a heat dissipater (Dis), in this case a dry one. The condensed refrigerant (represented in the figures by simple continuous arrows) will first be stored in a second tank (Ref), and therefrom it will be pumped to the third heat exchanger EVAP/COND by a second hydraulic pump (Pr) at a high pressure P_{TH}. The electrical energy required for such pumping is very small because the specific volume of liquid is considerably lower compared to that of the vapour. Once in the EVAP/COND, the ammonia will evaporate thanks to a quantity of heat Q_{TE} also provided by the flat solar collector (Colec), raising the temperature of the ammonia to a high temperature T_{TH}. Next, the ammonia in vapour phase will circulate to the ABS/GEN, wherein it will be absorbed by the solution poor in ammonia from the GEN/ABS, cited above. This absorption process will deliver useful heat Q_{TA} to the medium or chamber (Heated) that is to be heated. The Ammonia-Lithium Nitrate solution, now rich again in ammonia (represented in the figures by thick double arrows) and at high temperature T_{TH}, will be directed to the expansion valve (Vs) in order to reduce the pressure thereof, making it pass through the heat recuperator (Rec), in order to give up a portion of the heat thereof to the solution poor in ammonia which is directed to the ABS/GEN from the GEN/ABS. With a temperature value close to intermediate value T_{TI} and a low pressure P_{TL}, it will reach the GEN/ABS in order to start the process again.

In the case of the heat transformer, regarding the unevaporated Ammonia-Lithium Nitrate solution in the GEN/ABS, which will be poor in ammonia, it will be diverted to the other circuit. This solution, which will be at the low pressure P_{TL} and intermediate temperature T_{TI}, will be pumped to the ABS/GEN by the first hydraulic pump, but making it pass through the heat exchanger, reaching the absorber at a high pressure P_{TH} and with a value close to that of high temperature T_{TH}. In this way, the heat that the ABS/GEN supplies to the chamber will be greater.

In summary, with the present configuration of the absorption machine and starting from the heat supplied by a flat solar collector to the EVAP/COND and to the GEN/ABS, it is possible to evaporate the refrigerant at an intermediate temperature in the EVAP/COND and separate it from the solution in the GEN/ABS. This makes it so the refrigerant dissipates heat at a lower temperature level in the COND/EVAP and produces heat at a higher temperature level in the GEN/ABS, which is directed to the chamber to be heated. In short, the present absorption machine configuration is capable of recovering the heat available in the solar collector at a medium temperature level and converting it into useful heat at a higher temperature. Likewise, with the present configuration of the machine, the reduction in power is prevented when the temperature outside decreases, as occurs in mechanical vapour compression machines driven by electrical energy, achieving higher heating power at low ambient temperatures.

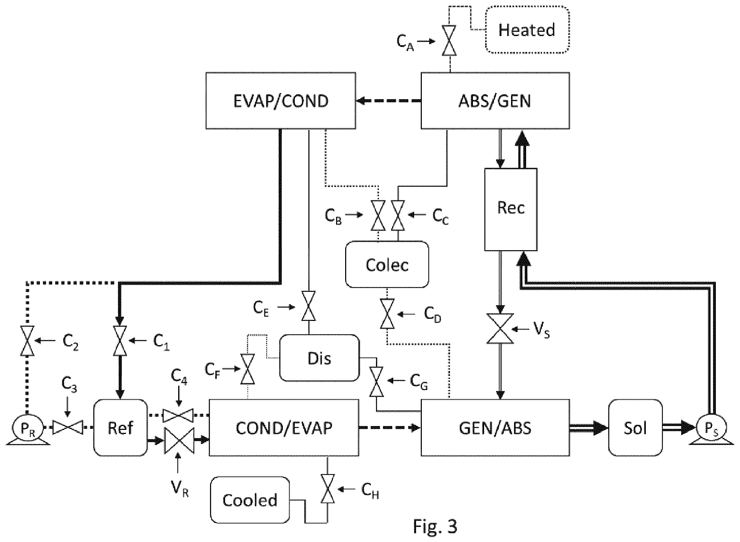

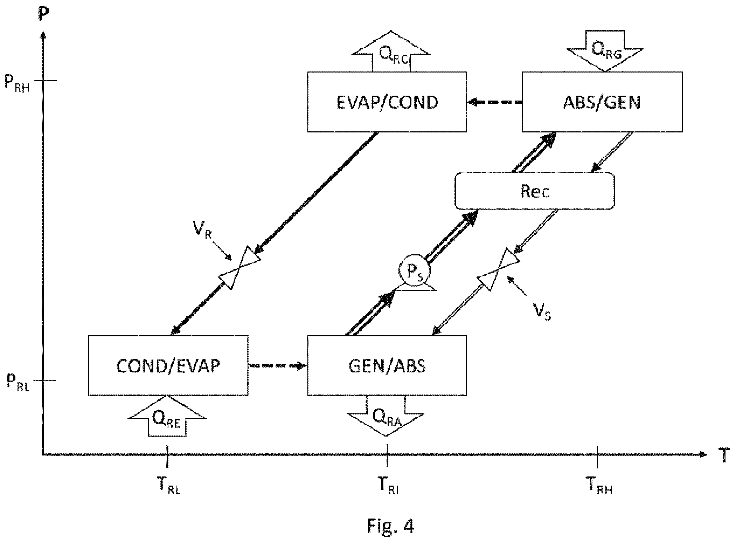

As shown in Fig. 3 and in Fig. 4, the second exemplary embodiment of the present absorption machine consists of the same previous heat transformer, to which components and modifications have been added which allow it to work in turn as an absorption chiller. The operations of the machine in the absorption chiller mode are described below.

When the absorption machine is in the absorption chiller mode, the flat solar collector (Colec) is configured to stop supplying heat to the GEN/ABS and the EVAP/COND, in order to supply it to the ABS/GEN. The latter is configured to receive a constant amount of heat Q_{RG} (the letter "R" of the subscript referring to the term "Refrigeration") of the flat solar collector (Colec), causing the temperature of the Ammonia-Lithium Nitrate solution located therein to increase to a high temperature value T_{RH}, of which a portion of the ammonia from the solution will evaporate. The ammonia vapour will continue through a circuit different from that of the unevaporated Ammonia-Lithium Nitrate solution, which will be poor in ammonia, as will be mentioned later.

The ammonia in vapour state at high pressure PRH and temperature T_{RH} will reach the EVAP/COND, wherein it will expel a heat Q_{RC} to the outside, condensing and reducing the temperature thereof to a value close to the intermediate value T_{RI}. In this operating mode, in order to dissipate the heat Q_{RC} generated in this process, the EVAP/COND is connected to the dissipation system (Dis). Then, the ammonia in liquid state will be directed to the second storage tank (V_{R}), from which it will be supplied to the second expansion valve (V_{R}). In it, it will expand isenthalpically, partially transforming into vapour, the temperature thereof falling to a lower temperature value T_{RL}, and the pressure decreasing to a lower pressure value P_{RL} suitable for reaching the COND/EVAP. Upon reaching it, the ammonia will extract the heat Q_{RE} coming from the medium or chamber (Cooled) that is intended to be cooled, being gasified again, but keeping the low pressure P_{RL}.

Subsequently, the ammonia vapour will be transferred to the GEN/ABS, wherein it will be absorbed by the solution not previously evaporated in the ABS/GEN. With this, it will transfer a quantity of heat O_{RA} to the outside, maintaining the solution at a temperature T_{RI}. In this operating mode, in order to dissipate the heat Q_{RA} generated in this process, the GEN/ABS is also connected to the dissipation system (Dis). The Ammonia-Lithium Nitrate solution, now rich again in ammonia, will be stored in the first tank (Sol), from which it will be pumped with the first hydraulic pump (Ps) to the ABS/GEN, but making it pass through the heat recuperator (Rec), wherein it will be preheated. In this way, the heat that the flat solar collector (Colec) must supply to the ABS/GEN so that the refrigerant is separated from the absorbent is lower.

As mentioned above, upon reaching the ABS/GEN, the solution, once again rich in ammonia, will be heated to a high temperature value T_{RH}, of which a portion of the ammonia will evaporate from the solution which will start the process described above. The unevaporated Ammonia-Lithium Nitrate solution in the ABS/GEN, poor in ammonia, will have been diverted to another circuit different from that of the evaporated ammonia. This unevaporated solution, which is at the high pressure P_{RH} and temperature T_{RH}, will first move to the heat recuperator (Rec), so that it provides a portion of the heat thereof to the solution rich in ammonia that is directed in the opposite direction to the very ABS/GEN. Subsequently, it will pass through the first expansion valve (Vs) in order to reduce the pressure thereof. With an intermediate temperature value T_{RI} and a low pressure P_{RL}, it will be transferred to the GEN/ABS, wherein it will absorb the ammonia vapour coming from the COND/EVAP, in order to continue the cycle as a solution rich in ammonia as described above.

As seen from the previous description, in order for the absorption machine to be able to change from the heat transformer mode to the absorption cooler mode and vice versa, it comprises a first series of control valves (C₁ - C₄) to direct the refrigerant either through the second hydraulic pump (P_{R}) for the heat transformer mode or through the second expansion valve (V_{R}) for the absorption chiller mode. Likewise, it comprises a second series of control valves (C_{B} - C_{D}) configured to redirect the thermal energy source either to the GEN/ABS and the EVAP/COND for the heat transformer mode or to the ABS/GEN for the absorption chiller mode. In turn, it comprises a third series of control valves (C_{E}-C_{G}) configured to connect the dissipation system (Dis) either to the COND/EVAP for the heat transformer mode or to the EVAP/COND and the GEN/ABS for the absorption chiller mode. Finally, it also comprises other control valves (C_{A} and C_{H}) which connect the ABS/GEN to the medium to be heated (Heated) for the heat transformer mode and the COND/EVAP to the medium to be cooled (Cooled) for the absorption chiller mode. It should be noted that in the second exemplary embodiment shown in Fig. 3, wherein the absorption machine is configured to work in absorption chiller mode, the connections between components which are deactivated by the corresponding control valves (C₂, C₃, C₄, C_{A}, C_{B}, C_{D}, C_{F}) are indicated by dotted lines (not to be confused with the dashed arrows of the refrigerant in vapour state).

In summary again, this second embodiment of the present absorption machine is also capable of working as an absorption chiller, producing a cooling effect in a medium or chamber when evaporating the refrigerant in the COND/EVAP, all of this starting from the heat provided to the ABS/GEN by the flat solar collector (Colec).

As a recap, thanks to the present invention, both the heating demand of a building in winter and the cooling demand in summer can be satisfied without needing an exhaustible energy source and with a single machine.

## Claims

1. An absorption machine for air conditioning, configured to act as a heat transformer used to heat a medium or chamber, comprising:
- a fluidic solution formed by a refrigerant-absorbent mixture,
- a first heat exchanger (GEN/ABS), configured to receive said solution and evaporate a portion of the refrigerant,
- a first hydraulic pump (Ps) configured to receive and pump the unevaporated solution in the first heat exchanger (GEN/ABS),
- a second heat exchanger (COND/EVAP), configured to receive and condense the refrigerant coming from the first heat exchanger (GEN/ABS) in vapour state,
- a heat dissipation system (Dis) connected to the second heat exchanger (COND/EVAP) and configured to dissipate the heat generated therein when the refrigerant is condensed,
- a second hydraulic pump (P_{R}) configured to receive and pump the condensed refrigerant coming from the second heat exchanger (COND/EVAP),
- a third heat exchanger (EVAP/COND), configured to receive and evaporate the condensed refrigerant coming from the second hydraulic pump (P_{R}),
- a fourth heat exchanger (ABS/GEN), configured to receive the evaporated refrigerant coming from the third heat exchanger (EVAP/COND), as well as the solution pumped by the first hydraulic pump (Ps), and make said refrigerant in vapour state coming from the third heat exchanger (EVAP/COND) be absorbed by said solution pumped by the first hydraulic pump (Ps), thereby transferring heat to the medium or chamber (Heated) intended to be heated,
- an expansion valve (Vs) configured to receive the solution coming from the fourth heat exchanger (ABS/GEN) and reduce the pressure thereof, in order to subsequently return it to the first heat exchanger (GEN/ABS), and
- a heat recuperator (Rec) configured so that, prior to reaching the expansion valve (Vs), the solution coming from the fourth heat exchanger (ABS/GEN) gives up a portion of the heat thereof to the solution directed to the first heat exchanger (GEN/ABS) coming from the first hydraulic pump (Ps),
**characterised in that** it comprises a thermal energy source configured to provide a fluid with a temperature between 35° C and 50° to the first heat exchanger (GEN/ABS) and the third heat exchanger (EVAP/COND).

2. The machine according to claim 1, **characterised in that** the refrigerant-absorbent solution consists of Ammonia-Lithium Nitrate, respectively.

3. The machine according to any of claims 1 or 2, **characterised in that** the thermal energy source consists of a flat solar collector (Colec).

4. The machine according to any of the preceding claims, **characterised in that** it comprises a first storage tank (Sol) configured to supply solution coming from the first heat exchanger (GEN/ABS).

5. The machine according to any of the preceding claims, **characterised in that** the dissipation system (Dis) consists of a dry dissipator.

6. The machine according to any of the preceding claims, configured to act as an absorption chiller when changing the direction of circulation of the refrigerant, **characterised in that**:
- the fourth heat exchanger (ABS/GEN) comprises a connection to the thermal energy source, and
- it comprises a second expansion valve (V_{R}) configured to isenthalpically expand refrigerant in liquid state coming from the third heat exchanger (EVAP/COND) and provide it partially transformed into vapour to the second heat exchanger (COND/EVAP).

7. The machine according to claim 6, **characterised in that**:
- the fourth heat exchanger (ABS/GEN) is also configured to receive the solution, as well as heat from the thermal energy source, and evaporate a portion of the refrigerant from the solution,
- the third heat exchanger (EVAP/COND) is also configured to receive the refrigerant in vapour state from the fourth heat exchanger (ABS/GEN) and condense it, in order to then provide it to the second expansion valve (V_{R}),
- the second heat exchanger (COND/EVAP) is also configured to receive and evaporate the refrigerant coming from the second expansion valve (V_{R}), extracting heat from the medium to be cooled,
- the first heat exchanger (GEN/ABS) is also configured to receive said refrigerant in vapour state from the second heat exchanger (COND/EVAP), as well as the unevaporated solution in the first heat exchanger (GEN/ABS), and make said refrigerant in vapour state coming from the second heat exchanger (COND/EVAP) be absorbed by the unevaporated solution in the fourth heat exchanger (ABS/GEN).

8. The machine according to any of claims 6 or 7, **characterised in that** the dissipation system (Dis) is connected to the fourth heat exchanger (GEN/ABS) and the second heat exchanger (EVAP/COND), configured to get rid of the heat released therein when the refrigerant is absorbed and condensed respectively when the machine works in absorption chiller mode.

9. The machine according to any of the preceding claims, **characterised in that** it comprises a second storage tank (Ref) configured to supply refrigerant coming from the second heat exchanger (COND/EVAP) or from the third heat exchanger (EVAP/COND).

10. The machine according to any of claims 6 to 9, **characterised in that** it comprises a series of control valves (C₁-C₄) configured to direct the refrigerant either through the second hydraulic pump (P_{R}) for the heat transformer mode or through the second expansion valve (V_{R}) for the absorption chiller mode.

11. The machine according to any of claims 6 to 10, **characterised in that** it comprises a series of valves (C_{B}-C_{D}) to redirect the thermal energy source either to the GEN/ABS and the EVAP/COND for the heat transformer mode or to the ABS/GEN for the absorption chiller mode.

12. The machine according to any of claims 6 to 11, **characterised in that** it comprises a third series of control valves (C_{E}-C_{G}) configured to connect the dissipation system (Dis) either to the COND/EVAP for the heat transformer mode or to the EVAP/COND and the GEN/ABS for the absorption chiller mode.

13. The machine according to any of claims 6 to 12, **characterised in that** it comprises a fourth series of control valves (C_{A} and C_{H}) which connect the ABS/GEN to the medium to be heated (Heated) for the heat transformer mode and to the COND/EVAP with the medium to be cooled (Cooled) for the absorption chiller mode.

14. The machine according to any of the previous claims, **characterised in that** the heat exchangers are made of welded or semi-welded plates.
